# EUROPÄISCHE PATENTSCHRIFT

(11) **EP 0 959 043 B1**
(45) Veröffentlichungstag und Bekanntmachung des Hinweises auf die Patenterteilung: **07.07.2004**
(21) Anmeldenummer: 98810457.6
(22) Anmeldetag: 18.05.1998
(51) Int. Cl.: C01D 3/16, B01D 9/00

(54) **Verfahren zur Aufbereitung einer mit Sulfat befrachteten Kochsalzlösung, insbesondere einer Anolytsole**
Process for treating a sodium chloride solution contaminated with sulphate, especially an anolyte brine
Procédé de traitement d'une solution de chlorure de sodium contaminée pat l'ion sulphate, spécialement une saumure d'anolyte

(43) Veröffentlichungstag der Anmeldung: 24.11.1999
(73) Patentinhaber: MESSO AG, 8401 Winterthur (CH)
(72) Erfinder: Hantelmann, Harald, 88263 Horgenzell (DE)
(74) Vertreter: VA TECH Patente GmbH & Co

(56) Entgegenhaltungen:
- EP-A- 0 492 727
- GB-A- 1 139 625
- HUANG, JUEMIN: "A new technical process for the joint production of sodium chloride and sodium sulfate" SYMP. SALT, [PROC.] (1993), 7TH(VOL. 2), 165-9 CODEN: SSAPDY;ISSN: 0277-4267, Bd. II, 1993, Seiten 165-169, XP002080274
- CHEMICAL ABSTRACTS, vol. 95, no. 20, 16. November 1981 Columbus, Ohio, US; abstract no. 171970, TSURUMI SODA CO., LTD., JAPAN: "Refining of sodium chloride solution containing mirabilite from sodium hydroxide manufacturing process" XP002080275 & JP 56 032252 A (TSURUMI SODA CO., LTD., JAPAN)

## Beschreibung

Die Erfindung betrifft ein Verfahren zur Aufbereitung einer mit Sulfat befrachteten Kochsalzlösung sowie eine Anlage zur Durchführung des Verfahrens, wobei die Kochsalzlösung insbesondere die Anolytsole einer Chlor-Alkali-Membranelektrolyse ist.

Wird bei einer Chlor-Alkali-Membranelektrolyse für die Anolytsole eine aus Salzlagerstätten gewonnene Kochsalzlösung verwendet, die kleine Anteile an Sulfat enthält (rund 3% bezogen auf den Salzanteil), so wird Na₂SO₄ in der Anolytsole angereichert, während die Konzentration des NaCl aufgrund der chlorgasbildenden Reaktion an der Anode abnimmt. Die nicht reagierenden Na⁺-Ionen werden zusammen mit Wasser durch die Membran in den Kathodenraum transportiert. Dort wird an der Kathode Wasserstoffgas H₂ gebildet. Die gleichzeitig entstehenden HO⁻-Ionen reichern zusammen mit den Na⁺-Ionen die Katholytlauge mit NaOH an, das laufend entfernt werden muss, um den Anteil von NaOH konstant bei rund 33 % halten zu können.

In kleinen Konzentrationen stört Sulfat, das in der Anolytsole gelöst ist, die Anodenreaktion nicht wesentlich. Trotzdem muss wegen dessen Anreicherung dieser Stoff laufend aus der Anolytsole entfernt werden Verunreinigungen können mit Fällungsreaktionen beseitigt werden. Zur Ausfällung von Sulfat können in einem ersten Schritt Calcium und in einem zweiten Barium verwendet werden, wobei Gips und Bariumsulfat, das nahezu unlöslich ist, entstehen. Ein auf Fällungsreaktionen beruhendes Verfahren verursacht jedoch ziemlich hohe Kosten. Aufgabe der Erfindung ist es daher, ein alternatives Verfahren zu schaffen, mit dem Sulfat aus einer Anolytsole abgetrennt werden kann und bei dem möglichst keine zusätzlichen Stoffe benötigt werden.

Aus der GB 1 139 625 A sowie aus dem Artikel "A new technical process for the joint production of sodium chloride and sodium sulfate" von Huang Juemin, Seventh Symposium on Salt, Vol. II, 165-169 (1993) sind Verfahren zur getrennten Kristallisation von Kochsalz und Na₂SO₄ bekannt. Diese Verfahren geben eine Anleitung zur Verdampfung von Kochsalzlösung, nicht jedoch zur Aufbereitung von Kochsalzlösung.

Die gestellte Aufgabe wird durch das in Anspruch 1 definierte Verfahren gelöst.

Bei dem Verfahren zur Aufbereitung einer mit Sulfat befrachteten Kochsalzlösung wird diese als Ausgangslösung folgender Behandlung unterzogen:
a) Eindampfen von mindestens eines Teils der Ausgangslösung unter Bildung von NaCl-Partikeln mittels einer Teilkristallisation sowie Separieren eines Gemisches, das Feststoffe enthält, so dass eine zweite Lösung entsteht, die weitgehend feststofffrei ist;
b) Entfernen von Sulfat in Form von Na₂SO₄ aus der zweiten Lösung nach einer weiteren Teilkristallisation, bei der Na₂SO₄-Partikel erzeugt werden, so dass eine feststofffreie dritte Lösung entsteht;
c) Zusammenführen des in Schritt a) separierten Gemisches mit der dritten Lösung und Wiederlösen der NaCl-Partikel des Gemisches zur Erzeugung einer Produktlösung.

Die abhängigen Ansprüche 2 bis 8 beziehen sich auf vorteilhafte Ausführungsformen des erfindungsgemässen Verfahrens. Gegenstand der Ansprüche 9 und 10 ist eine Anlage zur Durchführung des Verfahrens.

Nachfolgend wird die Erfindung anhand der Zeichnungen erläutert. Es zeigen:
- Fig. 1: ein Schema zu einer Chlor-Alkali-Membranelektrolyse, bei der die Anolytsole Sulfat enthält,
- Fig. 2: ein Schema zum erfindungsgemässen Verfahren, das Schritte umfasst, die anhand der Figuren 3 bis 5 detaillierter dargestellt werden, nämlich
- Fig. 3: eine dreistufige Verdampfung, die eine Teilkristallisation von NaCl umfasst,
- Fig. 4: eine Entspannungsverdampfung einschliesslich einer Teilkristallisation von Na₂SO₄ und
- Fig 5: eine Aufkonzentrierung von NaOH aus der Katholytlauge unter Bildung von Brüden, die als Wärmequelle bei der Sulfatentfernung nutzbar sind.

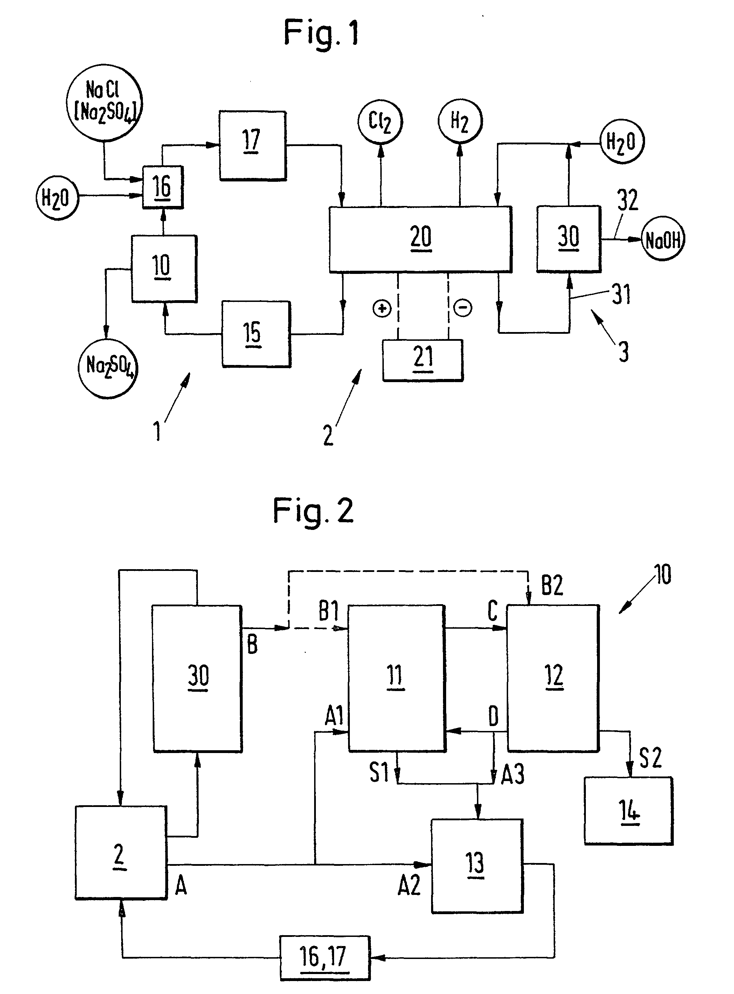

Bei der Chlor-Alkali-Membranelektrolyse 2 in Fig. 1 wird in einem Zellenblock 20 mittels des in einen Anolytsolekreislauf 1 eingespeisten Ausgangsstoffs NaCl und mittels elektrischer Energie einer Gleichstromquelle 21 Chlor Cl₂ und Wasserstoff H₂ produziert, wobei das in einem Katholytlaugenkreislauf 3 als Nebenprodukt anfallende NaOH aus dem Verfahren entfernt wird. Wegen einer Diffusion von OH⁻-Ionen durch die Membranen entgegen dem Transport der Na⁺-Ionen entstehen an den Anoden neben Chlor auch Chlorat und Hypochlorit, die aus der Anolytsole entfernt werden müssen (Block 15). Das Sulfat, das sich durch die Elektrolyse anreichert, wird nach dem erfindungsgemässen Verfahren in Form von Na₂SO₄ aus der Anolytsole entfernt (Block 10). Anschliessend wird bei der Elektrolyse verbrauchtes Kochsalz NaCl und Wasser H₂O mit einer sulfathaltigen Kochsalzlösung ergänzt (Block 16). Verunreinigungen, die zusätzlich zum Sulfat in den Kreislauf 1 gelangen, werden durch Fällungsreaktionen und Filtration entfernt (Block 17). Im Katholytlaugenkreislauf 31 wird NaOH durch eine Aufkonzentrierung eines nicht dargestellten Nebenstroms entfernt (Block 30); ein Manko an Wasser H₂O wird nachgespiesen.

Block 10 der Fig. 1 umfasst die Unterblöcke 11, 12, 13 und 14 in Fig. 2. Die Anolytsole A aus der Elektrolyse 2 wird in zwei Teilströme A1 und A2 geteilt. In einem ersten Verfahrensschritt a) (Block 11) wird der Teilsstrom A1 einer Verdampfung zugeführt, die eine Teilkristallisation von NaCl umfasst. Ein Gemisch S1, das NaCl-Partikeln enthält, wird in eine Lösungseinrichtung 13 geleitet. Dort wird das NaCl mit einer mit Natriumchlorat angereicherten Lösung A3 aus einem zweiten Verfahrensschritt b) (Block 12) und gleichzeitigem Zusammenführen mit dem Teilstrom A2 wieder gelöst. Die so gewonnene sulfatarme Produktlösung wird nach der Aufbereitung gemäss Fig. 1 (Blöcke 16, 17) wieder in die Elektrolyse 2 rückgefuhrt Ein Gemisch S2 mit sulfathaltigen Feststoffen (Na₂SO₄) wird durch Zentrifugieren und Trocknen (Block 14) in eine weiter verwertbare Form gebracht. Die sulfatarme Flüssigkeit, die dabei abgetrennt wird, kann auch über die Lösungseinrichtung 13 in das Verfahren rückgeführt werden (in Fig. 2 nicht dargestellt).

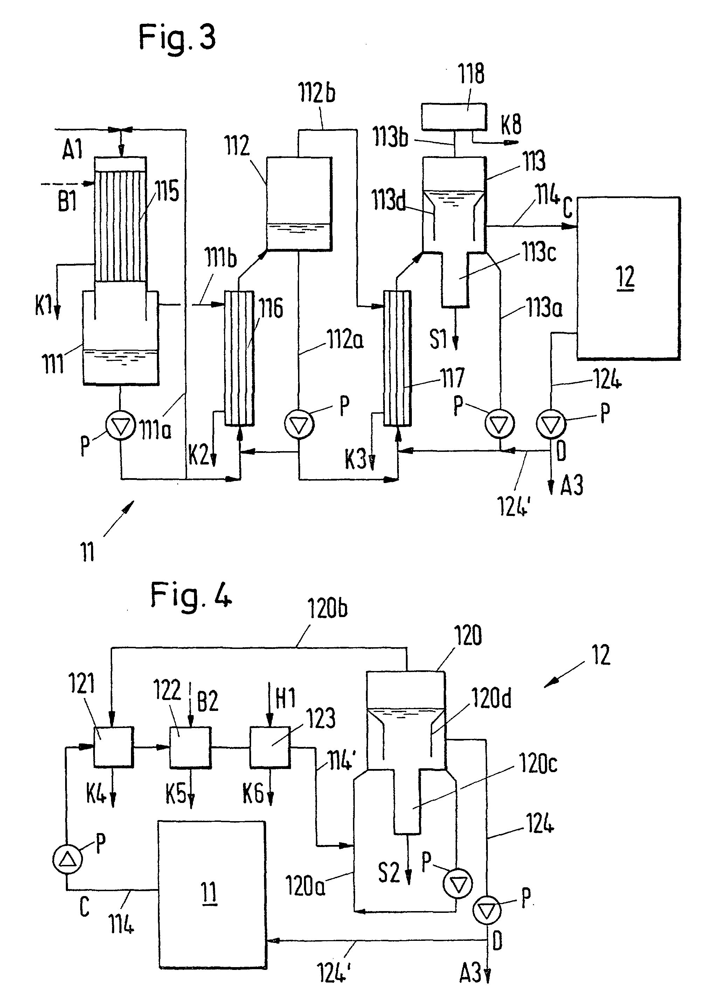

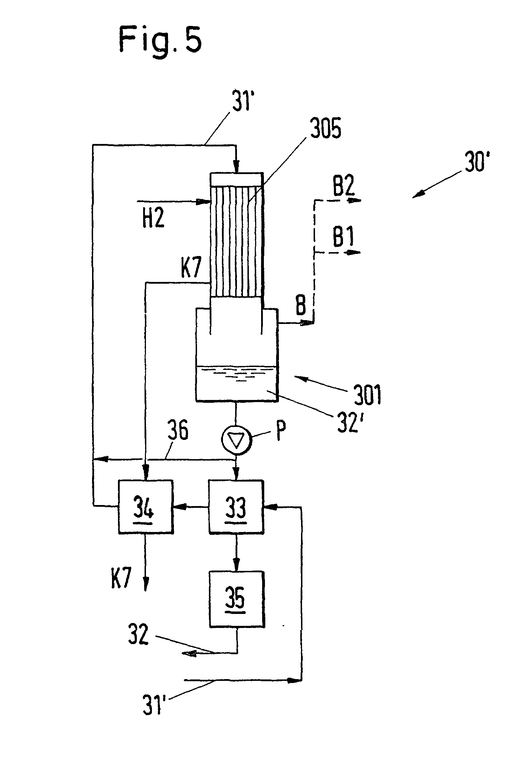

Fig. 3 stellt den ersten Verfahrensschritt 11 dar, der drei Stufen 111, 112 und 113 umfasst. Ein Fallfilmverdampfer der Stufe 111, mit einem Verdampferteil 115 und einer Soleumwälzung 111a (Pumpe P) erzeugt eine Brüde 111b. Die zweite Stufe 112, als Ausdampfkörper ausgebildet, bezieht die Verdampfungswärme aus der Brüde 111b in einer Heizkammer 116, die in einer Soleumwälzung 112a angeordnet ist. Eine ausgedampfte Brüde 112b wird in einer Heizkammer 117 der dritten Stufe 113 genutzt (Kreislauf 113a). Entstehende Brüden 113b werden in einem wassergekühlten Kondensator 118 zu einem Kondensat K8 verflüssigt. Der Fallfilmverdampfer 115 kann mit Heizdampf beheizt werden; im vorliegenden Beispiel geschieht dies mit Brüden B1 aus der NaOH-Aufkonzentrierung (vgl. Fig 5). Im Verfahrensschritt 11 werden durch die diversen Wärmeübertragungen Kondensate K1, K2, K3 und K8 gebildet.

In der dritten Verdampferstufe 113 findet die Teilkristallisation von NaCl bei einer Temperatur im Bereich von rund 35 bis 50 °C statt. Die gebildeten NaCl-Partikel sinken in den Salzsack 113c ab, aus dem das Gemisch S1, das diese Partikel enthalt, abziehbar ist. Ein Schürzenblech 113d bildet eine Dekantationszone in Form eines Ringraumes. Aus dieser wird über eine Verbindung 114 eine feststofffreie Lösung C dem Verfahrensschritt 12 - vgl. Figuren 2 und 4 - zugeführt, in dem Sulfat abgetrennt wird

Das Sulfat wird in Form von Na₂SO₄ aus der Lösung C abgeschieden: siehe Fig. 4. Dabei werden in einem Verdampfungskristallisator 120 durch eine weitere Teilkristallisation bei einer höheren Temperatur im Bereich von rund 80 bis 100 °C Na₂SO₄-Partikel erzeugt, die als Bestandteile eines Gemisches S2 aus dem Verfahren entfernbar sind. Es wird die inverse Löslichkeit des Na₂SO₄ gegenüber dem NaCl genutzt (Inverse Löslichkeit die Löslichkeit des NaCl nimmt mit zunehmender Temperatur zu, während für die Löslichkeit des Na₂SO₄ das umgekehrte gilt.)

Eine feststofffreie Lösung D lässt sich aus einer Dekantationszone abziehen, die durch ein Schürzenblech 120d von der feststoffhaltigen Lösung abgeschirmt ist. Ein Teil der feststofffreien Lösung D wird in den NaCl-Kristallisator 113 rückgefuhrt, so dass die beiden Kristallisatoren 113 und 120 über einen Solekreislauf 114, 114', 124 und 124' verbunden sind. Ein weiterer Teil der Lösung D, nämlich A3, muss wegen Natriumchlorat, das sich anreichert, abgeschlämmt werden; er wird in die Lösungseinrichtung 13 (Fig. 2) eingespeist.

Die Kreislaufsole (Verbindung 114) wird nach dem Verdampferkristallisator 113 des Schritts a) durch Wärmezufuhr in Vorwärmern 121, 122 und 123 in einen überhitzten Zustand gebracht. Die überhitzte Sole (114') wird über eine Soleumwälzung 120a in den Verdampferkristallisator 120 des Schritts b) eingespeist. Brüden 120b aus dem Kristallisator 120 werden im Vorwärmer 121 als Wärmequelle genutzt, wobei ein Kondensat K4 entsteht. In den anschliessenden Vorwärmern 122 und 123 entstehen aus Brüden B2 und Heizdampf H1 Kondensate K5 und K6

Fig. 5 zeigt einen Fallfilmverdampfer 301 zur Aufkonzentrierung eines Teils der Katholytlauge, die 33 % NaOH enthält. Durch die Verdampfung in Fallfilmrohren 305 mit Heizdampf H2 werden leicht alkalische Brüden B gebildet, die als Wärmequelle bei der Sulfatentfernung nutzbar sind: B1 in der ersten Verdampferstufe 111 und B2 im Vorwärmer 122 Ein Teil 31' der Katholytlauge 31 (siehe Fig. 1) wird in dem Fallfilmverdampfer 301 zu einer Lauge 32 aufkonzentriert (auf 50 % NaOH). Heisse aufkonzentierte Lauge 32' wird aus dem Verdampfer 301 abgezogen und in einem Wärmetauscher 33 sowie einem Kühler 35 abgekühlt. Im Wärmetauscher 33 wird die zugeführte Lauge 31' erwärmt. Kondensierter Heizdampf H2 - nämlich Kondensat K7 - wird in einem Wärmetauscher 34 zur weiteren Erwärmung der Lauge 31' genutzt Mit einem Zwangsumlauf über die Leitung 36 wird dafür gesorgt, dass auch bei einem Minderlastbetrieb eine ausreichende Benetzung der inneren Oberflächen der Rohre 305 sich einstellt.

Im Gesamtprozess fallen vier unterschiedliche Kondensatqualitäten an, die auf verschiedene Arten genutzt werden können. Reine Heizdampfkondensate K6 und K7 sowie leicht alkalische Kondensate K1 und K5 können in einer zur Chlor-Alkali-Elektrolyse gehörenden Demineralisierungsanlage (nicht dargestellt) verwendet werden. Leicht chlorid- und chlorathaltige Kondensate K2 und K3 können zum Waschen der Na₂SO₄-Partikel verwendet werden. Hoch-chlorathaltige Kondensate K4 und K8 dienen mit Vorteil bis auf einen Restanteil, der nicht genutzt werden kann, zur Verlösung des auskristallisierten NaCl in der Lösungseinrichtung 13 (Fig. 2).

Es kommen Entspannungsbehälter für die Kondensate in den Einsatz, die in den Zeichnungen nicht dargestellt sind. In diesen Behältern bilden sich unter Temperaturabsenkungen Entspannungsbrüden aus. Diese werden bei der Beheizung von Heizkammern genutzt.

Die NaOH-Konzentrierung 30' und die nachfolgenden Solestufen 11 werden mit Vorteil in einem gemeinsamen Gerüst untergebracht, so dass die als Verbindungen dienenden Rohrleitungen möglichst kurz und damit die Anlage möglichst kostengünstig wird.

## Patentansprüche

1. Verfahren zur Aufbereitung einer mit Sulfat befrachteten Kochsalzlösung, die als Ausgangslösung (A) folgender Behandlung unterzogen wird:
a) Eindampfen von mindestens eines Teils (A1) der Ausgangslösung unter Bildung von NaCl-Partikeln mittels einer Teilkristallisation (11) sowie Separieren eines Gemisches (S1), das Feststoffe enthält, so dass eine zweite Lösung (C) entsteht, die weitgehend feststofffrei ist;
b) Entfernen von Sulfat in Form von Na₂SO₄ aus der zweiten Lösung nach einer weiteren Teilkristallisation (12), bei der Na₂SO₄-Partikel erzeugt werden, so dass eine feststofffreie dritte Lösung (A3) entsteht;
c) Zusammenführen des in Schritt a) separierten Gemisches mit der dritten Lösung und Wiederlösen der NaCl-Partikel des Gemisches zur Erzeugung einer Produktlösung

2. Verfahren nach Anspruch 1, **dadurch gekennzeichnet, dass** die Ausgangslösung (A) vorübergehend in zwei Teilströme (A1, A2) geteilt wird, dass der eine der beiden Teilströme mittels der genannten Behandlung in eine sulfatarme oder weitgehend sulfatfreie Produktlösung umgesetzt wird, und diese Produktlösung mit dem unbehandelten Teilstrom zusammengeführt wird, wobei das bei der Erzeugung der sulfatarmen Produktlösung entstandene Gemisch mit NaCl-Partikeln bereits vor dem Zusammenführen mit dem unbehandelten Teilstrom vermischt werden kann, um das NaCl aufzulösen.

3. Verfahren nach Anspruch 1 oder 2, **dadurch gekennzeichnet, dass** die Teilkristallisationen des NaCl und des Na₂SO₄ unter Nutzung der inversen Löslichkeit des Na₂SO₄ gegenüber dem NaCl durchgeführt werden, indem nämlich das NaCl bei einer tieferen Temperatur von rund 35 bis 50 °C und das Na₂SO₄ bei einer höheren Temperatur von rund 80 bis 100 °C auskristallisiert werden.

4. Verfahren nach einem der Ansprüche 1 bis 3, **dadurch gekennzeichnet, dass** die in Schritt a) erfolgende Verdampfung in mehreren Verdampferstufen, vorzugsweise in drei Stufen durchgeführt wird, wobei Brüden, die in einer Stufe gebildet werden, in einer nachfolgenden Stufe als Heizdampf verwendet werden.

5. Verfahren nach Anspruch 4, **dadurch gekennzeichnet, dass** die Teilkristallisationen des NaCl und des Na₂SO₄ in Verdampferstufen durchgeführt werden, die in einem Kreislaufprozess über eine im Kreislauf geführte Sole miteinander verbunden sind, wobei insbesondere der Kreislaufprozess mit einer feststofffreien Kreislaufsole durchgeführt wird und in Verdampferkristallisatoren Mittel vorgesehen sind, durch die Partikel, die in der zu behandelnden Lösung enthalten sind, im Kristallisator zurückgehalten werden, wobei ferner Brüden, die bei der Sulfatentfernung des Schrittes b) gebildet werden, als Heizdampf im Schritt a) genutzt werden können

6. Verfahren nach Anspruch 5, **dadurch gekennzeichnet, dass** die Kreislaufsole nach dem Verdampferkristallisator des Schritts a) durch Wärmezufuhr in einen überhitzten Zustand gebracht wird und dass die überhitzte Sole in den Verdampferkristallisator des Schritts b) eingespeist wird.

7. Verfahren nach einem der Ansprüche 1 bis 6, **dadurch gekennzeichnet, dass** die Ausgangslösung eine Anolytsole aus einer Chlor-Alkali-Membranelektrolyse ist, dass die Produktlösung des Schritts c) vermischt mit einer sulfathaltigen Kochsalzlösung wieder der Membranelektrolyse zugeführt wird und dass eine Aufkonzentrierung einer durch die Membranelektrolyse entstandenen NaOH-Lauge mit der Behandlung der Anolytsole gekoppelt wird, indem die Lauge mit Wärme aus einem Frischdampf aufkonzentriert wird und die dabei freigesetzten alkalischen Brüden als Wärmequelle für die Verdampfung im Schritt a) verwendet werden.

8. Verfahren nach den Ansprüchen 7 und 6, **dadurch gekennzeichnet, dass** ein Teil der alkalischen Brüden für die Aufheizung der Kreislaufsole verwendet wird.

9. Anlage zum Durchführen des Verfahrens gemäss einem der Ansprüche 4 bis 6, folgende Komponenten umfassend:
- mehrere in Serie angeordnete Verdampferstufen, deren letzte als NaCl-Kristallisator, d h. Verdampfungskristallisator für die Abtrennung eines NaCl-Partikel enthaltenden Gemisches ausgebildet ist,
- ein weiterer Verdampfungskristallisator für eine Erzeugung von feststoffformigem Na₂SO₄, nämlich ein Na₂SO₄-Kristallisator, der zusammen mit dem NaCl-Kristallisator einen Kreislauf mit zirkulierender Sole bildet,
- Vorerwarmer für die Kreislaufsole anschliessend an den NaCl-Kristallisator;
- eine Zentrifuge für eine Abtrennung des feststoffförmigen Na₂SO₄,
- einen Lösebehälter zur Bildung der Produktlösung aus dem abgetrennten, NaCl enthaltenden Gemisch und der feststofffreien Lösung aus dem Na₂SO₄-Kristallisator.

10. Anlage nach Anspruch 9, **dadurch gekennzeichnet, dass** die erste Verdampferstufe, die insbesondere einen Fallfilmverdampfer umfasst, mit einer Einrichtung zur Aufkonzentrierung einer NaOH-Lauge aus der Katholytlauge in einer Verbindung steht, durch welche Brüden, die bei der Verdampfung der NaOH-Lauge entstanden sind, der ersten Verdampferstufe zu Heizzwecken zuführbar sind.

## Claims

1. A process for treating for treating a sulfate-contaminated common salt solution, which is subjected as the starting solution (A) to the following treatment:
a) evaporation of at least a proportion (A1) of the starting solution with formation of NaCl particles by means of partial crystallisation (11) and separation of a mixture (S1), which contains solids, such that a second solution (C) is obtained which is largely solids-free;
b) removal of sulfate in the form of Na₂SO₄ from the second solution after a further partial crystallisation (12), in which Na₂SO₄ particles are produced, such that a solids-free, third solution (A3) is obtained;
c) combination of the mixture separated in step a) with the third solution and redissolution of the NaCl particles of the mixture to produce a product solution.

2. A process according to claim 1, **characterised in that** the starting solution (A) is temporarily divided into two sub-streams (A1, A2), **in that** one of the two sub-streams is converted by means of the stated treatment into a sulfate-depleted or largely sulfate-free product solution and this product solution is combined with the untreated sub-stream, wherein the mixture containing NaCl particles obtained during production of the sulfate-depleted product solution may already be mixed in order to dissolve the NaCl before being combined with the untreated sub-stream.

3. A process according to claim 1 or 2, **characterised in that** partial crystallisation of the NaCl and of the Na₂SO₄ is performed by exploiting the inverse solubility of Na₂SO₄ relative to NaCl, specifically by crystallising the NaCl at a lower temperature of approx. 35 to 50°C and the Na₂SO₄ at a higher temperature of approx. 80 to 100°C.

4. A process according to one of claims 1 to 3, **characterised in that** the evaporation which proceeds in step a) is performed in two or more evaporator stages, preferably in three stages, wherein vapours which are formed in one stage are used as heating steam in a subsequent stage.

5. A process according to claim 4, **characterised in that** partial crystallisation of the NaCl and of the Na₂SO₄ is performed in evaporator stages, which are connected together in a circulation process via a circulated brine, wherein in particular the circulation process is performed with a solids-free circulation brine and means are provided in evaporative crystallisers by means of which the particles contained in the solution to be treated are retained in the crystalliser, wherein furthermore vapours formed during sulfate removal in step b) may be used as heating steam in step a).

6. A process according to claim 5, **characterised in that**, downstream from the evaporative crystalliser of step a), the circulation brine is converted into a superheated state by heat input and **in that** the superheated brine is introduced into the evaporative crystalliser of step b).

7. A process according to one of claims 1 to 6, **characterised in that** the starting solution is an anolyte brine from a chlor-alkali membrane electrolysis process, that the product solution of step c) mixed with a common salt solution containing sulfate is reintroduced into the membrane electrolysis and **in that** concentration of an NaOH liquor obtained by membrane electrolysis is coupled with treatment of the anolyte brine by the liquor being concentrated with heat from fresh steam and the alkaline vapours so released are used as a heat source for evaporation in step a).

8. A process according to claims 7 and 6, **characterised in that** a proportion of the alkaline vapours is used to heat the circulation brine.

9. A plant for performing the process according to one of claims 4 to 6 comprising the following components:
- two or more evaporator stages connected in series, the last of which is constructed as an NaCl crystalliser, i.e. evaporative crystalliser for separating a mixture containing NaCl particles,
- a further evaporative crystalliser for producing Na₂SO₄ in solid form, namely an Na₂SO₄ crystalliser, which, together with the NaCl crystalliser, forms a circuit with circulating brine,
- preheaters for the circulation brine downstream from the NaCl crystalliser,
- a centrifuge for separating the Na₂SO₄ in solid form,
- a dissolution vessel for forming the product solution from the separated mixture containing NaCl and the solids-free solution from the Na₂SO₄ crystalliser.

10. A plant according to claim 9, **characterised in that** the first evaporator stage, which in particular comprises a falling-film evaporator, is connected with an apparatus for concentrating an NaOH liquor from the catholyte liquor, through which apparatus it is possible to pass vapours, which have been obtained from evaporation of the NaOH liquor, from the first evaporator stage for heating purposes.

## Revendications

1. Procédé de traitement d'une solution de chlorure de sodium contaminée par du sulfate, soumise, à titre de solution initiale (A), au traitement suivant :
a) concentration d'au moins une partie (A1) de la solution initiale avec formation de particules de NaCl, au moyen d'une cristallisation partielle (11), ainsi que séparation d'un mélange (S1) qui contient des substances solides, de manière à ce que soit produite une deuxième solution (C) notablement exempte de substance solide ;
b) élimination du sulfate sous la forme de Na₂SO₄ depuis la deuxième solution, après une autre cristallisation partielle (12), lors de laquelle sont générées les particules de Na₂SO₄, de manière qu'une troisième solution (A3) exempte de substance solide soit produite ;
c) regroupement du mélange, séparé à l'étape a), avec la troisième solution et remise en solution de particules de NaCl du mélange pour produire une solution de produit.

2. Procédé selon la revendication 1, **caractérisé en ce que** la solution initiale (A) est provisoirement séparée en deux flux partiels (A1, A2), **en ce que** l'un des deux flux partiels est converti au moyen du traitement cité en une solution de produits pauvre en sulfate ou largement exempte de sulfate, et cette solution de produit étant regroupée avec le flux partiel non traité, le mélange, produit lors de la production de solution de produit pauvre en sulfate, avec des particules de NaCl, pouvant être mélangé avec le flux partiellement traité, avant le regroupement, pour dissoudre le NaCl.

3. Procédé selon la revendication 1 ou 2, **caractérisé en ce que** les cristallisations partielles du NaCl et du Na₂SO₄ sont effectuées en utilisant la solubilité inverse du Na₂SO₄ vis-à-vis du NaCl, **en ce que**, précisément, le NaCl est éliminé par séparation, à une température plus basse, de juste 35 à 50°C et le Na₂SO₄ est séparé par cristallisation à une température plus élevée, de juste 80 à 100°C.

4. Procédé selon l'une des revendications 1 à 3, **caractérisé en ce que** l'évaporation effectuée à l'étape a) est conduite en plusieurs étages d'évaporateur, de préférence en trois étages, sachant que les buées formées dans un étage sont utilisées comme vapeur de chauffage dans un étage aval.

5. Procédé selon la revendication 4, **caractérisé en ce que** les cristallisations partielles du NaCl et du Na₂SO₄ sont effectuées dans des étages d'évaporateur reliés ensemble dans un processus à circuit, par l'intermédiaire d'une saumure passée dans le circuit, en particulier le processus à circuit étant conduit avec une saumure en circuit exempte de substance solide, et dans les cristallisateurs à évaporateur étant prévus des moyens à l'aide desquels les particules contenues dans la solution à traiter sont retenues dans le cristallisateur, en outre des buées, formées lors de l'élimination des sulfates de l'étape b), pouvant être utilisées comme vapeurs de chauffage à l'étape a).

6. Procédé selon la revendication 5, **caractérisé en ce que** la saumure en circuit, après le cristallisateur à évaporateur de l'étape a), est amenée en un état surchauffé, par un apport de chaleur, et **en ce que** la saumure surchauffée est injectée dans le cristallisateur évaporateur de l'étape b).

7. Procédé selon l'une des revendications 1 à 6, **caractérisé en ce que** la solution initiale est une saumure anolyte issue d'une électrolyse à membrane chlore-alcali, **en ce que** la solution de produit de l'étape c) est mélangée à une solution de chlorure de sodium contenant du sulfate, est de nouveau amenée à l'électrolyse à membrane, et **en ce qu'**un processus de concentration d'une lessive de NaOH produite par l'électrolyse à membrane est couplé au traitement de la saumure d'anolyte, **en ce que** la lessive est concentrée à l'aide de la chaleur issue d'une vapeur neuve et les buées alcalines dégagées alors sont utilisées comme sources de chaleur pour l'évaporation effectuée à l'étape a).

8. Procédé selon les revendications 7 et 6, **caractérisé en ce qu'**une partie des buées alcalines est utilisée pour le chauffage de la saumure mise en circuit.

9. Installation de mise en oeuvre du procédé selon l'une des revendications 4 à 6, comprenant les composants suivants :
- une pluralité d'étages évaporateurs installés en série, dont le dernier est réalisé en cristalliseur de NaCl, c'est-à-dire en cristalliseur à évaporation pour la séparation d'un mélange contenant des particules de NaCl,
- un autre cristalliseur à évaporation pour produire du Na₂SO₄ sous forme solide, précisément un cristalliseur de Na₂SO₄ formant, conjointement avec un cristalliseur de NaCl, un circuit avec la saumure mise en circulation,
- des préchauffeurs pour la saumure en circulation, installés en aval du cristalliseur de NaCl ;
- une centrifugeuse pour effectuer la séparation du Na₂SO₄ sous forme solide,
- un récipient de mise en solution pour former la solution de produit à partir du mélange séparé, contenant du NaCl, et de la solution exempte de solide issus du cristalliseur Na₂SO₄.

10. Installation selon la revendication 9, **caractérisée en ce que** le premier étage d'évaporateur qui comprend en particulier un évaporateur à film tombant, est relié à un dispositif de concentration d'une lessive de NaOH issue de la lessive de catolyte, liaison au moyen de laquelle des buées, produites lors de l'évaporation de la lessive de NaOH, sont susceptibles d'être amenées à des fins de chauffage au premier étage d'évaporateur.
